# EUROPÄISCHE PATENTSCHRIFT

(11) **EP 1 051 316 B1**
(45) Veröffentlichungstag und Bekanntmachung des Hinweises auf die Patenterteilung: **04.09.2002**
(21) Anmeldenummer: 99904808.5
(22) Anmeldetag: 26.01.1999
(51) Int. Cl.: B60T 8/44, B60T 13/52

(54) **BREMSKRAFTÜBERSETZUNGSVORRICHTUNG, INSBESONDERE FÜR KRAFTFAHRZEUGE**
BRAKE-POWER TRANSMISSION DEVICE, ESPECIALLY FOR MOTOR VEHICLES
DISPOSITIF DE TRANSMISSION DE FORCE DE FREINAGE, NOTAMMENT POUR VEHICULES A MOTEUR

(30) Priorität: 31.01.1998 DE 19803821
(43) Veröffentlichungstag der Anmeldung: 15.11.2000
(73) Patentinhaber: Continental Teves AG & Co. oHG, 60488 Frankfurt (DE)
(72) Erfinder: HAUPT, Karlheinz, D-55435 Gau-Algesheim (DE); FEIGEL, Hans-Jörg, D-61191 Rosbach (DE); KRÄMER, Horst, D-63128 Dietzenbach (DE)
(86) Internationale Anmeldenummer: EP9900449
(87) Internationale Veröffentlichungsnummer: WO99038741

(56) Entgegenhaltungen:
- EP-A- 0 754 607
- EP-A- 0 800 975
- EP-A- 0 827 887
- EP-A- 0 850 815
- WO-A-98/00321
- DE-A- 19 501 760
- DE-C- 19 644 880

## Beschreibung

Die Erfindung betrifft eine Bremskraftübersetzungsvorrichtung für Kraftfahrzeuge mit einem betätigbaren Eingangsglied, einem Ausgangsglied zur Beaufschlagung insbesondere eines Hauptbremszylinders mit einer Verstärkungskraft und mit einem in einem Steuergehäuse angeordneten, mit einem Ventilkolben betätigbaren Steuerventil zur zur Regelung der infolge Druckdifferenz zwischen einer Kammer mit variablem Druck und einer Kammer mit Unterdruck erzeugten Verstärkungskraft, wobei Mittel zum Sensieren oder Erkennen des Aussteuerungspunkts der Bremskraftübersetzungsvorrichtung vorgesehen sind und wobei mit dem Mittel ein den Aussteuerungspunkt meldendes Signal generierbar ist.

Bremskrafthbersetzungsvorrichtungen sind grundsätzlich bekannt und in Benutzung. Bei der DE 196 44 880 C1 wird beispielsweise das Prinzip verfolgt, die Funktion eines pneumatischen Bremskraftverstärkers durch Abgleich mit der Pedalkraft (Fahrerwunsch) permanent zu überwachen und für den Fall da8 nicht die erforderliche Leistung erbracht wird eine Hilfskraftquelle vorzusehen. Das Bremssystem ist folglich redundant ausgelegt.

Ein Nachteil der bekannten Bremskraftverstärker ist, daß nur eine beschränkte Verstärkungskraft zur Verfügung steht. Die Kennlinie bezüglich des Eingangskraft/Ausgangskraft-Verhältnis eines Bremskraftverstärkers verläuft ganz grundsätzlich linear. Die Steigung der Kennlinie entspricht dem zur Verfügung stehenden, konstruktiv bedingten, Verstärkungsfaktor. Wenn die maximale Druckdifferenz zwischen Arbeitskammer und Vakuumkammer eingesteuert ist, liegt Vollaussteuerung vor, das heißt eine weitere Steigerung der Ausgangskraft ist nur mit Hilfe von zusätzlich aufgewendeter Fußkraft möglich.

Weil der Einbauraum im Fahrzeug stark eingeschränkt ist, können die Maße einer pneumatischen Bremskraftübersetzungsvorrichtung nicht einfach für eine größere Leistung erhöht werden. Andererseits werden aber die Fahrleistungen der Personenkraftwagen immer weiter gesteigert und erfordern deshalb leistungsfähigere Bremssysteme. Schließlich steht jedes neue Produkt unter einem enormen Einsparungs- und Kostendruck. Unter diesem Gesichtspunkt scheiden redundant ausgelegte Bremssysteme aus.

In der EP 0 800 975 A ist eine hydraulische Bremsanlage mit einem Vakuum-Bremskraftverstärker beschrieben, bei der bei einer Fehlfunktion des Vakuum-Bremskraftverstärkers eine hydraulische Pumpe die Druckerhöhung für die Bremsanlage bewirkt, wobei das Vakuum im Booster und der hydraulische Druck sensiert werden.

Die WO 98 00 321 A offenbart eine hydraulische Bremsanlage mit einem Vakuum-Bremskraftverstärker und mit einer hydraulischen Druckerhöhungsvorrichtung, insbesondere einer Vorladepumpe, mittels der nach Maßgabe der Bewegungscharakteristik des Bremspedals oder des hydraulischen Drucks eine Verstärkung des Bremsdrucks erfolgt.

In der EP 0 754 607 A ist ein Vakuum-Bremskraftverstärker beschrieben, dem ein Druckschalter in einer Arbeitskammer (Kammer variablen Drucks) zugeordnet ist, welcher den Druck in der Arbeitskammer sensiert, wobei eine Betätigung einer hydraulischen Druckerhöhungsvorrichtung, beispielsweise einer Hydraulikpumpe, dann erfolgt, wenn der Druck in der Arbeitskammer dem Umgebungsdruck entspricht.

Es ist eine Aufgabe der vorliegenden Erfindung, die Vorrichtungen nach dem Stand der Technik weiterzubilden und ein zuverlässiges und sicheres Erkennen des Aussteuerungspunktes des Bremskraftverstärkers zu ermöglichen.

Die Aufgabe wird mit den Merkmalen des kennzeichnenden Teils des Patentanspruchs 1 dadurch gelöst, daß Mittel zum Sensieren oder Erkennen des Aussteuerungspunkts der Bremskraftübersetzungsvorrichtung vorgesehen sind, die grundsätzlich auf unterschiedlichen Prinzipien beruhen. Erfindungsgemäß ist es so vorgesehen, einen Druckunterschied (Druckdifferenz) zwischen der Kammer mit variablem Druck und der Atmosphäre (Umgebungsluft) zu ermitteln und ferner eine Änderung der zeitlichen Ableitung des Druckes (Druckgradienten) in der Kammer variablen Drucks zu sensieren, wobei das Mittel bei gegen Null gehender Druckdifferenz und bei gegen Null gehender zeitlicher Ableitung des Druckes ein den Aussteuerungspunkt meldendes Signal generiert. Dabei wird ausgenutzt, daß sich grundsätzlich der Druck in einer Arbeitskammer eines pneumatischen Bremskraftverstärkers bei der Belüftung (also einer Bremsung) allmählich dem Umgebungsluftdruck annähert. Sobald kein Druckunterschied zu verzeichnen ist oder aber der Druckgradient Null ist, wird ein den Aussteuerungspunkt meldendes Signal generiert, was zur Aufschaltung oder Bereitstellung zusätzlicher Verstärkungsmittel nutzbar ist. Dies ermöglicht entsprechende Gegenmaßnahmen, wie beispielsweise die Aufschaltung einer hydraulischen Druckerhöhung, welche vorzugsweise durch ein ABS-Aggregat mit einer Hydraulikpumpe generierbar ist. Diese Verfahrensweise besitzt den Vorteil, daß der Bremskraftverstärker bewußt mit geringerer Leistung ausgeführt werden kann, so daß er beispielsweise 90 % aller Bremsungen im Fahrzeugleben genügt. Die besonders hohe Leistung für die restlichen 10 % aller Bremsungen, insbesondere für sogenannte Panikbremsungen mit höchster Bremskraft, werden dagegen von der anderen Verstärkungskraftquelle erbracht. Die Erfindung besitzt ferner den Vorteil, daß durch eine Regelung der von der Hydraulikpumpe generierten Druckerhöhung auch eine Regelung der zusätzlich aufgebrachten Verstärkungskraft herbeigeführt werden kann. Mit anderen Worten wird es also ermöglicht, den Verlauf der Kennlinie flexibler als bei bekannten Systemen an Komfortbedürfnisse oder Sicherheitsbedürfnisse anzupassen.

Bei einer anderen, differenzwegabhängigen Lösung ist ein Mittel zum Sensieren oder Erkennen eines Abstands zwischen Ventilkolben und Steuergehäuse, beispielsweise in Gestalt eines Schalters vorgesehen. Dieses Mittel liefert bei einem, dem Aussteuerungspunkt entsprechenden Abstand ein Schaltsignal oder Stellsignal insbesondere zur Aufschaltung zusätzlicher Verstärkungsmittel.

Es kommt vorzugsweise ein Schalter zur Anwendung, mit dem ein Schaltsignal derart abgebbar ist, daß ein Stromkreis geschlossen oder geöffnet wird. Alternativ hierzu ist es denkbar, einen Sensor vorzusehen, welcher ein entsprechendes Sensorsignal abgibt, beispielsweise ein Hall-Sensor.

Bei einer Weiterbildung der Erfindung schlägt der Ventilkolben bei Erreichen des Aussteuerungspunktes an einen im Steuergehäuse befindlichen Anschlag, so daß kein Abstand zwischen Ventilkolben und Steuergehäuse vorliegt. Das Mittel erfaßt den nicht vorhandenen Abstand und gibt ein, den Aussteuerungspunkt anzeigendes Signal ab.

Es versteht sich, daß die Erfindung nicht nur für eine veränderte Auslegung eines pneumatischen Bremskraftverstärkers herangezogen werden kann. Es ist ebenso denkbar, einen Defekt oder Ausfall eines konventionellen Bremskraftverstärkers mit der beschriebenen Vorrichtung zu kompensieren, ohne die Erfindung zu verlassen.

Einzelheiten der Erfindung gehen aus Unteransprüchen zusammen mit der Zeichnung und der Beschreibung hervor. Die Erfindung wird nachstehend anhand der Figuren, in denen ein schematisiertes Ausführungsbeispiel dargestellt ist, näher beschrieben. In der Zeichnung zeigt:
- Fig. 1: Kennlinie einer Bremskraftübersetzungsvorrichtung;
- Fig. 2: stark schematisierte Bremsanlage die eine pneumatische Bremskraftübersetzungsvorrichtung mit wegabhängiger Aussteuerungspunktsensierung gemäß der Erfindung aufweist, und
- Fig. 3: schematisierter Schaltplan einer anderen erfindungsgemäßen Lösung mit druckabhängiger Aussteuerungspunkterkennung.

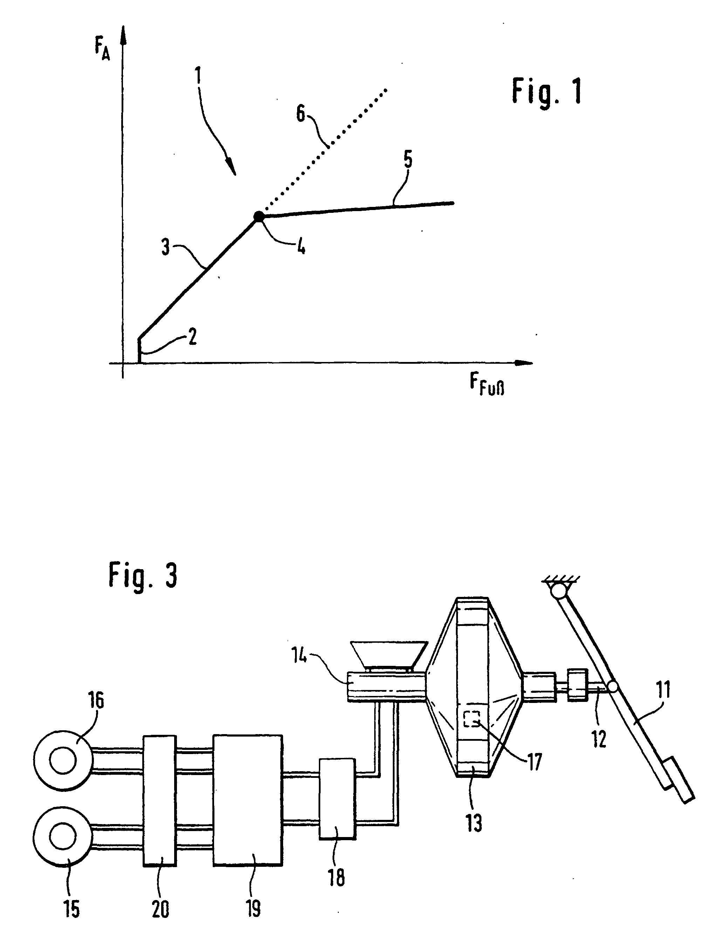

Die grundsätzliche Wirkung eines Bremskraftverstärkers ist in Fig. 1 verdeutlicht. Die Fig. zeigt eine Kennlinie 1 einer Bremskraftübersetzungsvorrichtung, wobei die Verstärkungskraft F_{A} (Ausgangskraft) über der aufgewendeten Fußkraft F_{Fuß} (Eingangskraft) aufgetragen ist. Ein aus dem Nullpunkt entspringender erster Ast 2 der Kennlinie 1 zeigt einen sogenannten Springer, das heißt ein quasi plötzliches Ansprechen des Bremskraftverstärkers bei einer bestimmten Eingangskraft. Diesem Ast 2 schließt sich der Betriebsbremsbereich 3 mit dem gerätespezifisch festgelegten Verstärkungsfaktor (Steigung der Kennlinie) an. Der Betriebsbremsbereich 3 wird durch den Aussteuerungspunkt 4 beendet. An den normalen Betriebsbremsbereich 3 schließt sich regelmäßig ein Ast 5 mit verringerter Steigung an, welcher bei konventionellen Bremskraftverstärkern durch eine Fußkraftsteigerung, also alleine infolge der zusätzlich aufgewendeten Fußkraft gekennzeichnet ist. Die Steigung beträgt hier 1:1, das heißt mit einem zusätzlichen Fußkraftinkrement wird genau ein zusätzliches Ausgangskraftinkrement erzeugt. Die Erfindung erlaubt es, nach passieren des Aussteuerungspunkts 4 eine zusätzliche Verstärkungskraftquelle vorzusehen und kontrolliert aufzuschalten oder sogar die zusätzlich aufgebrachte Verstärkungskraft zu regeln. Es ist folglich auch eine sogenannte Bremsassistenten-Funktion mit ganz plötzlichem Kraftanstieg (steile Kennlinie) erzeugbar. Die Wirkung der zusätzlich aufgebrachten Verstärkungskraft verdeutlicht in Fig. 1 exemplarisch der gepunktete Ast 6.

Eine pneumatische Bremskraftübersetzungsvorrichtung 7 umfaßt grundsätzlich ein aus Schalen aufgebautes Gehäuse, welches mindestens zwei, durch eine bewegliche Wand voneinander getrennte Kammern aufweist. Die eine der Kammern ist eine Konstantdruckkammer und steht permanent unter Unterdruck, während die andere der Kammern im unbetätigten Zustand ebenfalls unter Unterdruck steht, jedoch im Rahmen der Betätigung mit Hilfe eines in einem Steuergehäuse angeordneten Steuerventils mit Umgebungsluft unter Umgebungsdruck dosiert belüftbar ist. Im voll ausgesteuerten Zustand entspricht der Druck in dieser sogenannten Arbeitskammer dem Druck der Umgebungsatmosphäre. Die Bremskraftübersetzungsvorrichtung 7 umfasst darüber hinaus ein mit Fußkraft beaufschlagbares Eingangsglied 8, welches mit einem Ventilkolben des Steuerventils versehen ist, und ein einen Hauptbremszylinder mit der Verstärkungskraft beaufschlagendes Ausgangsglied 9. Die maximale Verstärkungskraft der pneumatischen Bremskraftübersetzungsvorrichtung wird maßgeblich durch die maximal erzielbare Druckdifferenz zwischen den beiden Kammern bestimmt.

Die Bremskraftübersetzungsvorrichtung 7 ist mit einem Mittel 10 zum Erkennen des Aussteuerungspunktes 4 versehen, mit dem ein den Aussteuerungspunkt 4 meldendes Signal generierbar ist.

In konstruktiver Hinsicht sind verschiedene Bauformen für das Mittel 10 denkbar. Bei einer Variante der Erfindung sensiert das Mittel 10 eine Druckdifferenz zwischen der Kammer mit variablem Druck (Arbeitskammer) und dem Umgebungsluftdruck und generiert aus diesen Informationen ein den Aussteuerungspunkt meldendes Signal, wenn maximale Druckdifferenz vorliegt. Dieses Vorgehensweise kann grundsätzlich auch auf den Druckgradientenverlauf in der Arbeitskammer angewendet werden, so daß als Kriterium für den Aussteuerungspunkt 4 die zeitliche Ableitung des Druckes in der Arbeitskammer gleich Null gesetzt wird. Als Mittel 10 bieten sich hierbei Drucksensoren an, welche vorzugsweise im Bereich des oder sogar an dem Steuerventil angeordnet sind.

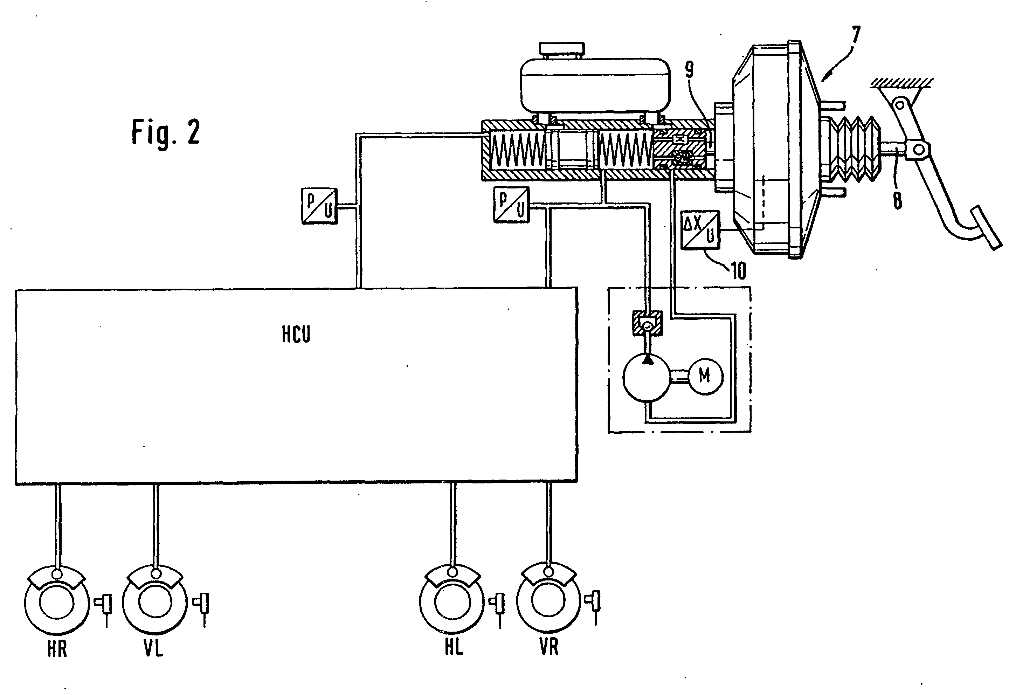

Bei einer anderen Lösung entsprechend Fig. 2 erfasst das Mittel 10 einen Abstand zwischen Ventilkolben und Steuergehäuse. Die Anordnung ist so gewählt, daß das Mittel 10 ein den Aussteuerungspunkt 4 meldendes Signal abgibt, wenn eine dem Aussteuerungspunkt 4 entsprechende Verschiebung (Abstand) zwischen einem Steuergehäuse und einem Ventilkolben vorliegt. Die Abstimmung der Anordnung ist besonders einfach möglich, wenn der Ventilkolben bei Ereichen des Aussteuerungspunktes 4 an einen im Steuergehäuse befindlichen Anschlag anliegt. In diesem Zustand liegt zwischen Ventilkolben und Steuergehäuse kein Abstand vor, was von dem Mittel 10 erfaßt wird. Folglich gibt das Mittel 10 ein, den Aussteuerungspunkt 4 meldendes Signal ab.

Die Verwendung eines Schalters, insbesondere in Mikrobauform bietet sich als Mittel 10 an, weil ein äußerst geringer Platzbedarf benötigt wird und derartige Schalter sehr kostengünstig als Standardbauteil massenweise hergestellt werden. Allerdings könnten ebenso Sensoren, insbesondere Hall-Sensoren eingesetzt werden, wenn es um ein präziseres Signal geht.

Das derart gewonnene Signal kann zur Aufschaltung einer zusätzlichen Verstärkungskraftquelle, beispielsweise unter Verwendung einer motorisch angetriebenen hydraulischen Pumpe wie sie bei ABS-Bremsanlagen oder bei einer Lenkhilfe Verwendung findet, genutzt werden. Dabei wird mit dem Signal vorzugsweise ein Stromkreis geschlossen oder geöffnet und damit wiederum ein umschaltbares Verstellelement wie beispielsweise ein Magnetventil betätigt. Alternativ oder ergänzend kann es vorgesehen sein, mit dem Signal den Motor der Hilfskraftquelle zu beaufschlagen, das heißt ein- beziehungsweise auszuschalten oder sogar derart den erzeugten Druck zu regeln, daß eine Beeinflußung der Verstärkerkennlinie 1 vorzugsweise hinsichtlich ihrer Steigung erzielt wird. Dies besitzt den Vorteil, daß der Fahrer die zusätzlich aufgebrachte Bremskraft feinfüliger dosieren kann. Die Aufschaltung der Hilfskraftquelle führt beispielsweise zu dem in Fig. 1 gestrichelt gekennezeichneten Ast 6 der Kennlinie 1. Dessen Steigung ist selbstverständlich im Rahmen der zitierten Regelung der zusätzlichen Verstärkungskraftquelle zur Anpassung an Komfort- oder Sicherheitsbedürfnisse veränderbar.

Fig. 3 zeigt einen stark schematisierten Schaltplan einer Lösung mit mehreren Drucksensoren sowie einem Pedalkraftsensor an dem Eingangsglied 12, was zum Vorteil hat, daß die Verstärkerkennlinie 1 oberhalb des Aussteuerungspunkts 4 des pneumatischen Bremskraftverstärkers geregelt veränderbar ist. Eine grundsätzlich bekannte Pedalanordnung 11 wirkt mit einem Eingangsglied 12 auf einen pneumatischen Bremskraftverstärker 13 und dieser wiederum mit einem Ausgangsglied auf einen Hauptbremszylinder 14. Hydraulische Leitungen dienen der Verbindung zwischen Hauptbremszylinder 14 und einem Ventilblock 19 (HCU) in Verbindung, welcher seinerseits mit den Radbremsen 15,16 hydraulisch verbünden ist. Erste Drucksensoren 17 dienen zur Bestimmung des Arbeitskammerdruckes im Bremskraftverstärker oder für die Ermittlung der Druckdifferenz / des Druckgradientenverlauf in der Arbeitskammer. Zweite Sensoren 18 dienen zur Ermittlung des Hydraulikdrucks unmittelbar nach dem Hauptbremszylinder und noch vor dem Ventilblock 19 und dritte Sensoren 20 werden zur Ermittlung des Hydraulikdrucks an den Radbremsen 15,16 herangezogen. Wie ersichtlich, sind für eine möglichst übersichtliche Darstellung die gegebenenfalls erforderlichen Auswerteschaltungen und elektronischen Baugruppen zur Be- und Verarbeitung der Sensorsignale nicht gezeichnet. Die Regelung des zusätzlich aufgebrachten Bremsdrucks geschieht durch Vergleich eines den Solldruck (Fahrerwunsch) repräsentierenden Signals, beispielsweise des Drucks im Hauptbremszylinder 14 mit dem über die dritten Sensoren 20 ermittelten Druck an den Radbremsen. In Abwandlung der geschilderten Vorgehensweise ist die Verwendung der direkt am Eingangsglied mit Hilfe des in der Figur ersichtlichen Kraftsensors gemessenen Kraft denkbar, ohne den Grundgedanken der Erfindung zu verlassen.

Es versteht sich, daß die notwendigen Rechenoperationen selbstverständlich in entsprechend vorgesehenen Datenverarbeitungseinheiten vorgenommen werden, in die die notwendigen Rechenalgorithmen implementiert worden sind.

## Patentansprüche

1. Bremskraftübersetzungsvorrichtung für Kraftfahrzeuge mit einem betätigbaren Eingangsglied (8,12), einem Ausgangsglied (9) zur Beaufschlagung insbesondere eines Hauptbremszylinders (14) mit einer Verstärkungskraft und mit einem in einem Steuergehäuse angeordneten, mit einem Ventilkolben betätigbaren Steuerventil zur Regelung der infolge Druckdifferenz zwischen einer Kammer mit variablem Druck und einer Kammer mit Unterdruck erzeugten Verstärkungskraft, wobei Mittel (10) zum Sensieren oder Erkennen des Aussteuerungspunkts (4) der Bremskraftübersetzungsvorrichtung vorgesehen sind und daß mit dem Mittel (10) ein den Aussteuerungspunkt (4) meldendes Signal generierbar ist,
**dadurch gekennzeichnet, daß** das Mittel (10) eine Druckdifferenz zwischen der Kammer mit variablem Druck und dem Umgebungsdruck und ferner eine Änderung der zeitlichen Ableitung des Druckes in der Kammer variablen Drucks sensiert, und daß das Mittel (10) bei gegen Null gehender Druckdifferenz und bei gegen Null gehender zeitlicher Ableitung des Druckes ein den Aussteuerungspunkt (4) meldendes Signal generiert.

2. Bremskraftübersetzungsvorrichtung nach Anspruch 1, **dadurch gekennzeichnet, daß** als Mittel (10) Drucksensoren im Bereich des Steuerventils vorgesehen sind, und daß die Drucksensoren zur Ermittlung der Druckdifferenz zwischen dem Druck in der Kammer variablen Drucks und dem Umgebungsluftdruck und zur Ermittlung des Druckgradienten in der Kammer variablen Drucks herangezogen werden.

3. Bremskraftübersetzungsvorrichtung nach Anspruch 1, **dadurch gekennzeichnet, daß** das Mittel (10) eine Relativverschiebung zwischen Ventilkolben und Steuergehäuse erfasst und ein den Aussteuerungspunkt (4) meldendes Signal abgibt, wenn ein dem Aussteuerungspunkt (4) entsprechender Abstand vorliegt.

4. Bremskraftübersetzungsvorrichtung nach einem oder mehreren der vorhergehenden Ansprüche, **dadurch gekennzeichnet, daß** als Mittel (10) ein Schalter vorgesehen ist, welcher ein elektrisches Schaltsignal abgibt, wenn der Aussteuerungspunkt vorliegt.

5. Bremskraftübersetzungsvorrichtung nach einem oder mehreren der vorhergehenden Ansprüche, **dadurch gekennzeichnet, daß** als Mittel (10) ein Sensor, beispielsweise ein Hall-Sensor vorgesehen ist.

6. Verfahren zum Steuern einer Kraftfahrzeugbremsanlage, insbesondere nach einem oder mehreren der vorhergehenden Ansprüche,
**dadurch gekennzeichnet, daß** die zeitliche Ableitung des Druckes in einer Kammer variablen Drucks eines Bremskraftverstärkers ermittelt wird, daß die zeitliche Ableitung des Druckes getaktet oder permanent überwacht wird, und daß bei gegen Null gehender zeitlicher Ableitung des Druckes ein den Aussteuerungspunkt (4) meldendes Signal generiert wird, welches als Schaltsignal einer Verstärkungskraftquelle, insbesondere einer hydraulischen Druckerhöhungsvorrichtung zugeführt wird, und für eine Verstärkungskrafterhöhung über den Aussteuerungspunkt (4) der pneumatischen Bremskraftübersetzungsvorrichtung hinaus nutzbar ist.

## Claims

1. A braking force boosting device for automotive vehicles which includes an actuatable input member (8,12), an output member (9) for applying a boosting force to a master brake cylinder (14), in particular, and a control valve, actuatable by a valve piston and arranged in a control housing, for controlling the boosting force generated as a result of a pressure difference between a chamber of variable pressure and a vacuum chamber, with means (10) being provided for sensing or identifying the point of maximum boosting (4) of the braking force boosting device and by way of this means (10) it being possible to generate a signal reporting the point of maximum boosting (4),
**characterized in that** the means (10) senses a pressure difference between the chamber of variable pressure and the ambient pressure and further a change of the time derivative of the pressure in the chamber of variable pressure and **in that**, the pressure difference approaching zero and the time derivative of the pressure approaching zero, the means (10) generates a signal reporting the point of maximum boosting (4).

2. A braking force boosting device as claimed in claim 1, **characterized in that** pressure sensors are provided as means (10) in the area of the control valve, and **in that** the pressure sensors are used to sense the pressure difference between the pressure in the chamber of variable pressure and the ambient pressure and to determine the pressure gradient in the chamber of variable pressure.

3. A braking force boosting device as claimed in claim 1, **characterized in that** the means (10) detects a relative displacement between valve piston and control housing and emits a signal reporting the point of maximum boosting (4) when there exists a distance corresponding to the point of maximum boosting (4).

4. A braking force boosting device as claimed in any one or more of the preceding claims, **characterized in that** the means (10) is configured as a switch which outputs an electric operating signal reporting the point of maximum boosting.

5. A braking force boosting device as claimed in any one or more of the preceding claims, **characterized in that** the means (10) is configured as a sensor, e.g. a Hall sensor.

6. A method of controlling a brake system of an automotive vehicle, in particular as claimed in any one or more of the preceding claims,
**characterized in that** the time derivative of the pressure in a chamber of variable pressure of a brake booster is determined, **in that** the time derivative of the pressure is clocked or permanently supervised, and **in that**, the time derivative of the pressure approaching zero, a signal is generated which reports the point of maximum boosting (4), which is fed as an operating signal to a boosting force source, in particular to a hydraulic pressure increase device, and which is usable for an increase in the boosting force beyond the point of maximum boosting (4) of the pneumatic braking force boosting device.

## Revendications

1. Dispositif de multiplication de force de freinage pour véhicule automobile, comprenant un organe d'entrée (8, 12) pouvant être actionné, un organe de sortie (9) servant à appliquer une force d'amplification notamment à un maître-cylindre de frein (14), et une valve de commande qui est disposée dans le boîtier de commande, qui peut être actionnée à l'aide d'un piston de valve et qui sert à la régulation de la force d'amplification produite du fait d'une différence de pression entre une chambre à pression variable et une chambre à dépression, dans lequel sont prévus des moyens (10) servant à détecter ou constater le point de réglage à fond (4) du dispositif de multiplication de force de freinage et dans lequel un signal indiquant le point de réglage à fond (4) peut être produit à l'aide des moyens (10),
**caractérisé en ce que** les moyens (10) détectent une différence de pression entre la chambre à pression variable et la pression environnante et en outre une variation de la dérivée dans le temps de la pression dans la chambre à pression variable, et **en ce que**, pour une différence de pression tendant vers zéro et pour une dérivée dans le temps de la pression tendant vers zéro, les moyens (10) produisent un signal indiquant le point de réglage à fond (4).

2. Dispositif de multiplication de force de freinage suivant la revendication 1, **caractérisé en ce que** des capteurs de pression situés dans la zone de la valve de commande sont prévus en tant que lesdits moyens (10), et **en ce qu'**il est fait appel aux capteurs de pression pour déterminer la différence de pression entre la pression dans la chambre à pression variable et la pression d'air environnant et pour déterminer le gradient de pression dans la chambre à pression variable.

3. Dispositif de multiplication de force de freinage suivant la revendication 1, **caractérisé en ce que** les moyens (10) détectent un décalage relatif entre le piston de valve et le boîtier de commande et délivrent un signal indiquant le point de réglage à fond (4) lorsqu'il se présente une distance correspondant au point de réglage à fond (4).

4. Dispositif de multiplication de force de freinage suivant une ou plusieurs des revendications précédentes, **caractérisé en ce qu'**un commutateur qui délivre un signal de commutation électrique lorsque le point de réglage à fond se présente est prévu en tant que lesdits moyens (10).

5. Dispositif de multiplication de force de freinage suivant une ou plusieurs des revendications précédentes, **caractérisé en ce qu'**un capteur, par exemple un capteur Hall, est prévu en tant que lesdits moyens (10).

6. Procédé de commande d'un dispositif de freinage de véhicule automobile, notamment conforme à une ou plusieurs des revendications précédentes, **caractérisé en ce que** la dérivée dans le temps de la pression dans une chambre à pression variable d'un amplificateur de force de freinage est déterminée, **en ce que** la dérivée dans le temps de la pression est surveillée à intervalles réguliers ou d'une manière permanente, et **en ce qu'**est produit, pour une dérivée dans le temps de la pression tendant vers zéro, un signal indiquant le point de réglage à fond (4) qui est envoyé, en tant que signal de commutation, à une source de force d'amplification, notamment un dispositif d'augmentation de pression hydraulique, et est utilisable pour une augmentation de force d'amplification au-delà du point de réglage à fond (4) du dispositif de multiplication de force de freinage pneumatique.
